(19) **Europäisches Patentamt / European Patent Office / Office européen des brevets**

(11) **EP 1 190 874 B1**

(12) **EUROPEAN PATENT SPECIFICATION**

(45) Date of publication and mention of the grant of the patent:
**14.02.2007 Bulletin 2007/07**

(51) Int Cl.:
***B60C 23/06*** (2006.01)

(21) Application number: **01307978.5**

(22) Date of filing: **19.09.2001**

(54) **Apparatus and method for alarming decrease in tyre air pressure**

Gerät und Verfahren zum Detektieren eines Druckabfalls im Reifen

Appareil et procédé concernant la détection d'une baisse de pression dans un pneumatique

(84) Designated Contracting States:
**DE FR GB**

(30) Priority: **20.09.2000 JP 2000285420**

(43) Date of publication of application:
**27.03.2002 Bulletin 2002/13**

(73) Proprietors:
- **Sumitomo Rubber Industries, Ltd.**
  **Kobe-shi,**
  **Hyogo-ken (JP)**
- **Sumitomo Electric Industries, Ltd.**
  **Osaka-shi,**
  **Osaka-fu (JP)**

(72) Inventor: **Sugisawa, Toshifumi**
**Chuo-ku,**
**Kobe-shi,**
**Hyogo-ken (JP)**

(74) Representative: **Manitz, Finsterwald & Partner GbR**
**Postfach 31 02 20**
**80102 München (DE)**

(56) References cited:
**EP-A- 0 291 217        EP-A- 0 832 767**
**EP-A- 0 908 331**

**Description**

The present invention relates to a system and a method for alarming decrease in tyre air pressure. More particularly, it relates to a system and a method for alarming decrease in tyre air pressure which is capable of detecting decompression of a tyre even when performing high speed running with tyres as fuel-efficient tyres which are soft and highly flat.

It is conventionally known for a system for alarming decrease in tyre air pressure (DWS) to use the rotational (wheel speed) information of the four wheels. Such a system is based on the theory that the rotational velocity or rotational angular velocity of a deflated tyre is increased compared to other normally inflated tyres since its outer diameter (dynamic load radius) is decreased in contrast to tyres of normal internal pressure. In a method for detecting decrease in internal pressure on the basis of such a relative difference of rotational angular velocities of tyres (refer to Japanese Unexamined Patent Publication NO. 305011/1988), a judged value DEL is defined as follows:

$$DEL = \{(F1+F4)/2-(F2+F3)/2\}/\{(F1+F2+F3+F4)/4\} \times 100(\%)$$

Here, F1 to F4 are the rotational angular velocities of the front left tyre, the front right tyre, the rear left tyre and the rear right tyre, respectively.

Upon calculation of this DEL value, required correction such as cornering correction or rejection of unnecessary data is performed, and then it is determined that decompression of a tyre has occurred where the obtained value exceeds a preliminarily set threshold.

However, since centrifugal force acts on tyres during running, tyres are apt to be deflected outwardly. It can thus happen in the conventional method that a deflated tyre is not detected since the tyre diameter does not vary to a large extent owing to the effect of centrifugal force even though the tyre is actually deflated or decompressed.

Such cases in which deflation of a tyre cannot be detected increasingly happen when performing high-speed running such as at approximately 150 km/h using tyres of fuel-efficient design. Such tyres of fuel efficient or fuel-sparing design are soft and have a substantially flat structure and are especially apt to deflect outwardly since the structural resistance to centrifugal force is weakened when the internal pressure is decreased. For this reason, deflation can hardly be detected with a conventional apparatus for alarming decrease in tyre air pressure when performing high-speed running at approximately 150 km/h with such tyres for fuel-sparing design.

The present invention has been made in view of the above facts, and it is an object thereof to provide an apparatus and a method for alarming decrease in tyre air pressure with which it is possible to detect compression of a tyre also when the vehicle is running at high-speed.

According to the present invention, there is provided a system for alarming decrease in tyre air pressure which detects the decrease in internal pressure of the tyre based on wheel speed information obtained from wheels of a vehicle and accordingly alarms a driver, comprising: a wheel speed information detecting means which detects wheel speed information of the respective tyres, a memory means which stores the wheel speed information of the respective tyres, a calculating means which calculates a judged value based on vehicle velocity and wheel speed information of the respective tyres, and a judging means which determines a decrease in tyre air pressure based on correlation of the vehicle velocity and an outer diameter of the tyre at the time of performing high-speed running.

In accordance with the present invention, there is also provided a method for alarming decrease in tyre air pressure which detects the decrease in internal pressure of the tyre based on wheel speed information obtained from wheels of a vehicle and accordingly alarms a driver, comprising the steps of: detecting wheel speed information of the respective tyres, storing the wheel speed information of the respective tyres, calculating a judged value based on a vehicle velocity and wheel speed information of the respective tyres, and determining a decrease in tyre air pressure based on correlation of the vehicle velocity and an outer diameter of the tyre at the time of performing high-speed running.

The system and method for alarming decrease in tyre air pressure according to the present invention will now be explained bases on the accompanying drawings in which:

Figure 1 is a block diagram illustrating an embodiment of a system for alarming decrease in tyre air pressure according to the present invention; and
Figure 2 is a block diagram illustrating the electrical arrangements of the apparatus for alarming decrease in tyre air pressure of Figure 1.

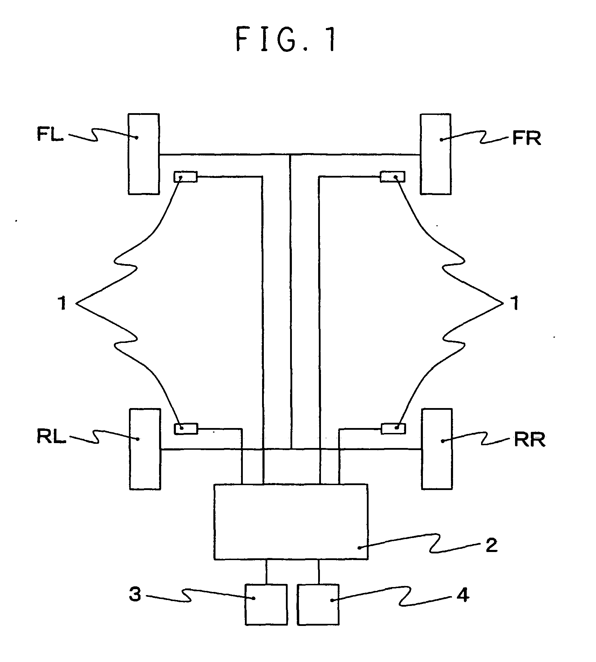

As shown in Figure 1, the system for alarming decrease in air pressure is so designed as to detect whether or not the pneumatic pressure of any of four tyres FL, FR, RL and RR (front left tyre, front right tyre, rear left tyre, and rear right tyre) attached to a four-wheeled vehicle has decreased. It is provided with ordinary wheel speed sensors 1 respectively arranged in connection with each of the tyres FL, FR, RL and RR. Each wheel speed sensor 1 detects rotational information of one of the respective tyres such as number of revolutions, rotational velocity or angular velocity. Outputs of the wheel speed sensors 1 are supplied to a control unit 2. To the control unit 2, there are connected a display device 3 constituted by a liquid crystal display element, a plasma display element, or a CRT for informing the driver about the tyres FL, FR, RL and RR (W1 to W4) and which has a decreased pneumatic pressure, and an initialisation switch 4 capable of being operated by the driver.

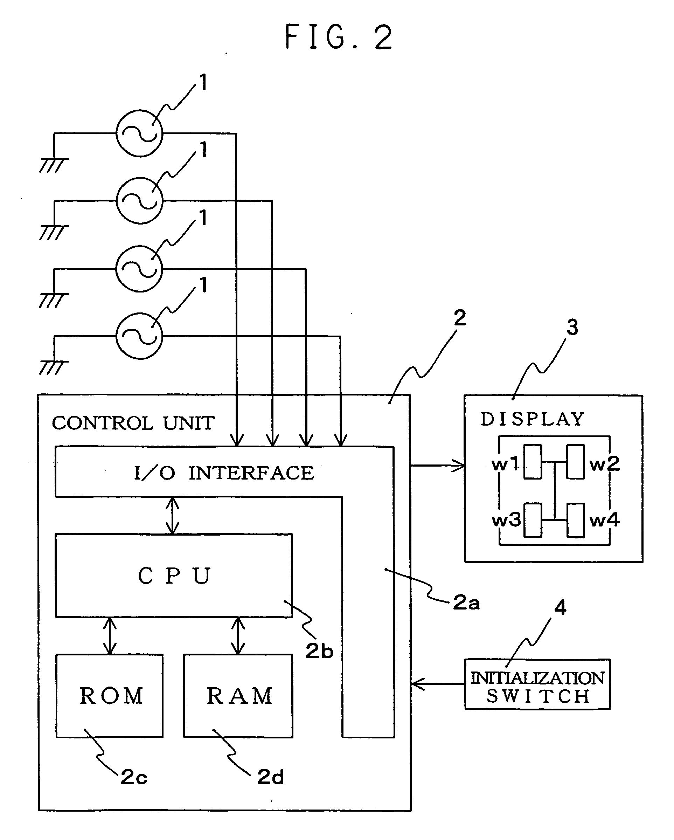

As illustrated in Figure 2, the control unit 2 includes an I/O interface 2a required for sending/receiving signals to/from an external device, a CPU 2b functioning as a centre of calculating process, a ROM 2c storing a control operation program of the CPU 2b, and a RAM 2d acting as memory means into which data is temporarily written or the written data is read out at a time when the CPU 2b executes the control operation.

In the present embodiment, the wheel speed sensor 1 functions as the wheel speed information detecting means, and the control unit 2 includes the memory means, the calculating means and the judging means therein.

Among general tyres, the influences of centrifugal force on tyre is increased when performing high-speed running especially with tyres of soft tyre structure. In addition to the original soft structure, occurrence of decompression will act to further decrease the lockup force of the tyre so that the amount of outward deflection of the tyre increases owing to centrifugal force. This results in the fact that the tyre diameter is easily varied with velocity and that the correlation between the vehicle velocity and the outer diameter of the tyre becomes higher with decompression.

In other words, in the case where a ratio between a value, which is a value obtained by subtracting a sum of wheel speeds of one pair of wheels located on one diagonal line from a sum of wheel speeds of the other pair of wheels located on the other diagonal line, and an average value of the two sums is set to be the judged value (DEL value), occurrence of decompression will increase the reliability of the amount of variation in the outer diameter of the tyre on the velocity. It might thus be understood that the correlation between the DEL value and the vehicle velocity becomes remarkably high when performing high speed running with a tyre in a decompressed condition.

The DEL value can be obtained by the following equation.

$$\text{DEL} = \frac{\dfrac{V_{(1)} + V_{(4)}}{2} - \dfrac{V_{(2)} + V_{(3)}}{2}}{\dfrac{V_{(1)} + V_{(2)} + V_{(3)} + V_{(4)}}{4}} \times 100 \qquad \ldots\ldots(1)$$

Here, V(X) denotes a rotational velocity of a tyre (m/sec), wherein X: 1=front left tyre, 2=front right tyre, 3=rear left tyre, 4=rear right tyre.

In the case where each of the tyre air pressures of the four wheels are substantially identical, influences of centrifugal force will similarly be substantially identical and accordingly be cancelled so that the DEL value will be hardly affected.

The present embodiment utilises the phenomenon that the correlation between the vehicle velocity and the outer diameter of the tyre becomes higher at the time of performing high-speed running since a decompressed tyre is increasingly affected by centrifugal force generated at the time of rotation of the tyre when compared to remaining tyres of normal internal pressure, and calculates the correlation coefficient between the DEL value and the vehicle velocity at the time of performing high-speed running. When it is determined that the correlation coefficient has exceeded a preliminarily set threshold and that the correlation between the DEL value and the vehicle and the vehicle is remarkably high, it is determined that a tyre is in a decompressed condition and the drive is accordingly alarmed.

For instance, when $x_i$ is set to the i-th vehicle velocity and $y_i$ is set to the i-th DEL value, the correlation $r$ between the judged value and the vehicle velocity is obtained from the following equation (2).

$$r = \frac{S(xy)}{\sqrt{S(xx) \bullet S(yy)}} \qquad \ldots\ldots(2)$$

Here, S(xx) and S(yy) indicate a sum of squares of deviation of variates x and y, respectively and S(xy) indicates a sum of products of deviation of x and y. More particularly,

$$S(xx) = \sum_{i=1}^{n}(x_i - \overline{x})^2 = \sum_{i=1}^{n}x_i^2 - \left(\sum_{i=1}^{n}x_i\right)^2 / n \qquad .....(3)$$

$$S(yy) = \sum_{i=1}^{n}(y_i - \overline{y})^2 = \sum_{i=1}^{n}y_i^2 - \left(\sum_{i=1}^{n}y_i\right)^2 / n \qquad .....(4)$$

$$S(xy) = \sum_{i=1}^{n}(x_i - \overline{x})(y_i - \overline{y}) = \sum_{i=1}^{n}x_iy_i - \left(\sum_{i=1}^{n}x_i\right)\left(\sum_{i=1}^{n}y_i\right) / n$$

$$.....(5)$$

Note that $\underline{n}$ is the number of data in which a pair of data of x and y is counted as one, A sample correlation coefficient $\underline{r}$ obtained from the above equation (2) is in the range of

$$-1 \leq r \leq 1$$

Since the correlation coefficient $\underline{r}$ might generally be regarded as "remarkably high correlation" when the correlation coefficient exceeds 0.8, it is preferable to set the same in the range of 0.8 to 1 or -0.8 to -1.

### EXAMPLE

While the present invention will now be explained based on an example thereof, the present invention is not to be limited by this example alone.

A front-wheel driving vehicle (FF vehicle) was provided with tyres of fuel-sparing design (tyre size: 155/70R15). The vehicle was driven on a high-speed road with all of the four tyres set to normal internal pressure (vehicle A) and then with only the rear right tyre deflated by 40% (vehicle B).

A sampling time for the wheel speeds was set to be 1 second. A measuring time for the running was set to be 10 minutes.

The vehicle B was made to run at a vehicle velocity V of not more than 100 km/h and at an average vehicle velocity of 151 km/h (minimum velocity 90 km/h to maximum velocity 190 km/h).

Decrease in tyre air pressure was determined based on the correlation between the judged value (DEL value) and the vehicle velocity V during running of the above vehicle A and vehicle B (Example), and determination of decompression was further performed in accordance with conventional methods in which an average of judged values (DEL values) is obtained (Comparative Example). The results are illustrated in Table 1. The threshold for issuing alarm in Example was set to be -0.8 to -1 or 0.8 to 1. The threshold for issuing alarm in the Comparative Example was set to be 0.15.

TABLE 1

| Conditions for Running | Average DEL value according to conventional method (Comparative Example) | Alarm issued? | Correlation coefficient between DEL value and V (Example | Alarm issued? |
|---|---|---|---|---|
| All four tyres at normal internal pressure | -0.008 | NO | 0.53 | NO |
| Rear right tyre decompressed by 40% (not more than 100 km/h) | 0.21 | YES | 0.30 | NO |
| Rear right tyre decompressed by 40% (90 to 190 km/h, average 150 km/h) | 0.14 | NO | -0.85 | YES |

It can be seen from Table 1 that while decompression would be detected in Comparative Example in a velocity region of not more than 100 km/h, it was impossible to detect decompression in the high-speed region ranging from 90 km/h to 190 km/h. On the other hand, while decompression could not be detected in Example in a velocity region of not more than 100 km/h, it was possible to detect decompression in a high-speed region ranging from 90 km/h to 190 km/h. Thus, it can be understood that the performance of the detecting decompression was improved by concurrently using both methods for detection.

As explained so far, according to the present invention, it is possible to determine a decompression of a tyre based on the correlation between the judged value and the vehicle velocity also where the judged value does not become large owing to increased influence of centrifugal force during high-speed running even though a tyre is in a decompressed condition. Thus, by performing determination upon combining a conventional method and the present invention, it is possible to determine decompression of a tyre in both high-speed regions and low-speed regions.

**Claims**

1. A system for alarming decrease in tyre air pressure which detects the decrease in internal pressure of the tyre based on wheel speed information obtained from wheels of a vehicle and accordingly alarms a driver, **characterised by** a wheel speed information detecting means (1) which detects wheel speed information of the respective tyres (FL, FR, RL, RR), a memory means (2d) which stores the wheel speed information of the respective tyres, a calculating means (2b) which calculates a judged value based on a vehicle velocity and wheel speed information (V1 to V4) of the respective tyres, and a judging means which determines a decrease in tyre air pressure based on correlation of the vehicle velocity and an outer diameter of the tyre at the time of performing high-speed running.

2. A system according to claim 1, **characterised in that**, in case there is correlation between an outer diameter of the tyre and a wheel speed of a wheel of the tyre, the judging means obtains a judged value for judging decompression which is a ratio between a value obtained by subtracting a sum of wheel speeds of one pair of wheels located on one diagonal line from a sum of wheel speeds of the other pair of wheels located on the other diagonal line, and an average value of the two sums; and determines the decrease of tyre air pressure based on correlation between the judged value and a vehicle velocity at a high speed running.

3. A system according to claim 2, **characterised in that** the correlation coefficient in the correlation between the judged value and the vehicle velocity is in the range of 0.8 to 1 or -0.8 to -1.

4. A method for alarming decrease in tyre air pressure which detects the decrease in internal pressure of the tyre based on wheel speed information obtained from wheels (FL, FR, RL, RR) of a vehicle and accordingly alarms a driver, **characterised by** the steps of: detecting wheel speed information (V 1 to V4) of the respective tyres, storing the wheel speed information of the respective tyres, calculating a judged value based on a vehicle velocity and wheel speed information of the respective tyres, and determining a decrease in tyre air pressure based on correlation of the vehicle velocity and an outer diameter of the tyre at the time of performing high-speed running.

**5.** A method according to claim 4, **characterised in that** the decrease in tyre air pressure is judged by obtaining a judged value for judging decompression which is a ratio between a value obtained by subtracting a sum of wheel speeds of one pair of wheel located on one diagonal line from a sum of wheel speeds of the other pair of wheels located on the other diagonal line, and an average value of the two sums; and determining the decrease of tyre air pressure based on correlation between the judged value and a vehicle velocity at a high speed running.

**6.** A method according to claim 5, **characterised in that** the correlation coefficient in the correlation between judged value and the vehicle velocity is in the range of 0.8 to 1 or -0.8 to -1.

**Patentansprüche**

**1.** System zum Warnen vor einer Abnahme eines Reifenluftdrucks, das die Abnahme eines Innendrucks des Reifens auf der Basis von Raddrehzahlinformationen detektiert, die von Rädern eines Fahrzeugs beschafft werden, und demgemäß einen Fahrer warnt,
**gekennzeichnet durch**
ein Raddrehzahlinformationsdetektionsmittel (1), das Raddrehzahlinformationen von entsprechenden Reifen (FL, FR, RL, RR) detektiert, ein Speichermittel (2d), das die Raddrehzahlinformationen der jeweiligen Reifen speichert, ein Berechnungsmittel (2b), das einen Beurteilungswert auf der Basis einer Fahrzeuggeschwindigkeit und von Raddrehzahlinformationen (V1 bis V4) der jeweiligen Reifen berechnet, und ein Beurteilungsmittel, das eine Abnahme eines Reifenluftdrucks auf der Basis einer Korrelation der Fahrzeuggeschwindigkeit und eines Außendurchmessers des Reifens zum Zeitpunkt einer Ausführung eines Schnelllaufes bestimmt.

**2.** System nach Anspruch 1,
**dadurch gekennzeichnet, dass**
in dem Fall, in dem eine Korrelation zwischen einem Außendurchmesser des Reifens und einer Raddrehzahl eines Rads des Reifens besteht, das Beurteilungsmittel einen Beurteilungswert zur Beurteilung eines Druckverlusts beschafft, der ein Verhältnis zwischen einem Wert, der beschafft wird, indem eine Summe von Raddrehzahlen eines Paares von Rädern, das auf einer Diagonalen angeordnet ist, von einer Summe von Raddrehzahlen des anderen Paares von Rädern, das auf der anderen Diagonalen angeordnet ist, subtrahiert wird, und einem Mittelwert der zwei Summen ist; und die Abnahme eines Reifenluftdrucks auf der Basis einer Korrelation zwischen dem Beurteilungswert und einer Fahrzeuggeschwindigkeit bei einem Schnelllauf bestimmt.

**3.** System nach Anspruch 2,
**dadurch gekennzeichnet, dass**
der Korrelationskoeffizient in der Korrelation zwischen dem Beurteilungswert und der Fahrzeuggeschwindigkeit im Bereich von 0,8 bis 1 oder -0,8 bis -1 liegt.

**4.** Verfahren zum Warnen vor einer Abnahme eines Reifenluftdrucks, das die Abnahme eines Innendrucks der Reifens auf der Basis von Raddrehzahlinformationen detektiert, die von Rädern (FL, FR, RL, RR) eines Fahrzeugs beschafft werden, und demgemäß einen Fahrer warnt,
**gekennzeichnet durch** die Schritte, dass: Raddrehzahlinformationen (V 1 bis V4) der jeweiligen Reifen detektiert werden, die Raddrehzahlinformationen der jeweiligen Reifen gespeichert werden, ein Beurteilungswert auf der Basis einer Fahrzeuggeschwindigkeit und von Raddrehzahlinformationen der jeweiligen Reifen berechnet wird und eine Abnahme eines Reifenluftdrucks auf der Basis einer Korrelation der Fahrzeuggeschwindigkeit und eines Außendurchmessers des Reifens zum Zeitpunkt einer Ausführung eines Schnelllaufes bestimmt wird.

**5.** Verfahren nach Anspruch 4,
**dadurch gekennzeichnet, dass**
die Abnahme eines Reifenluftdrucks beurteilt wird, indem ein Beurteilungswert zur Beurteilung eines Druckverlusts beschafft wird, der ein Verhältnis zwischen einem Wert, der beschafft wird, indem eine Summe von Raddrehzahlen eines Paares von Rädern, das auf einer Diagonalen angeordnet ist, von einer Summe von Raddrehzahlen des anderen Paares von Rädern, das auf der anderen Diagonalen angeordnet ist, subtrahiert wird, und einem Mittelwert der zwei Summen ist; und die Abnahme eines Reifenluftdrucks auf der Basis einer Korrelation zwischen dem Beurteilungswert und einer Fahrzeuggeschwindigkeit bei einem Schnelllauf bestimmt wird.

**6.** Verfahren nach Anspruch 5,
**dadurch gekennzeichnet, dass**

der Korrelationskoeffizient in der Korrelation zwischen dem Beurteilungswert und der Fahrzeuggeschwindigkeit im Bereich von 0,8 bis 1 oder -0,8 bis -1 liegt.

**Revendications**

1. Système pour la détection d'une baisse de pression dans un pneumatique qui détecte la baisse de la pression interne du pneumatique sur la base d'informations de vitesse de roue obtenues à partir des roues d'un véhicule et avertit en conséquence un conducteur, **caractérisé par** un moyen de détection d'informations de vitesse de roue (1) qui détecte des informations de vitesse de roue des pneumatiques respectifs (FL, FR, RL, RR), un moyen de mémoire (2d) qui mémorise les informations de vitesse de roue des pneumatiques respectifs, un moyen de calcul (2b) qui calcule une valeur jugée basée sur la vitesse du véhicule et les informations de vitesse de roue (V1 à V4) des pneumatiques respectifs, et un moyen de jugement qui détermine une baisse de pression dans un pneumatique sur la base d'une corrélation de la vitesse du véhicule et d'un diamètre extérieur du pneumatique au moment de la marche à grande vitesse.

2. Système selon la revendication 1, **caractérisé en ce que**, dans le cas où il existerait une corrélation de la vitesse du véhicule et d'un diamètre extérieur du pneumatique, le moyen de jugement obtient une valeur jugée pour juger une décompression qui est un rapport entre une valeur obtenue en soustrayant une somme de vitesses de roue d'une paire de roues situées sur une diagonale d'une somme de vitesses de roue de l'autre paire de roues situées sur l'autre diagonale et d'une valeur moyenne des deux sommes ; et détermine la baisse de pression dans le pneumatique sur la base d'une corrélation entre la valeur jugée et une vitesse du véhicule durant la marche à grande vitesse.

3. Système selon la revendication 2, **caractérisé en ce que** le coefficient de corrélation dans la corrélation entre la valeur jugée et la vitesse du véhicule est dans la plage de 0,8 à 1 ou -0,8 à -1.

4. Procédé pour la détection d'une baisse de pression dans un pneumatique qui détecte la baisse de la pression interne du pneumatique sur la base d'informations de vitesse de roue obtenues à partir des roues (FL, FR, RL, RR) d'un véhicule et avertit en conséquence un conducteur, comprenant les étapes consistant à : détecter des informations de vitesse de roue (V1 à V4) des pneumatiques respectifs, mémoriser les informations de vitesse de roue des pneumatiques respectifs, calculer une valeur jugée basée sur la vitesse du véhicule et les informations de vitesse de roue des pneumatiques respectifs, et déterminer une baisse de pression dans un pneumatique sur la base d'une corrélation de la vitesse du véhicule et d'un diamètre extérieur du pneumatique au moment de la marche à grande vitesse.

5. Procédé selon la revendication 4, **caractérisé en ce que** la baisse de pression dans le pneumatique est jugée en obtenant une valeur jugée pour juger une décompression qui est un rapport entre une valeur obtenue en soustrayant une somme de vitesses de roue d'une paire de roues situées sur une diagonale d'une somme de vitesses de roue de l'autre paire de roues situées sur l'autre diagonale et d'une valeur moyenne des deux sommes ; et en déterminant la baisse de pression dans le pneumatique sur la base d'une corrélation entre la valeur jugée et une vitesse du véhicule durant la marche à grande vitesse.

6. Procédé selon la revendication 5, **caractérisé en ce que** le coefficient de corrélation dans la corrélation entre la valeur jugée et la vitesse du véhicule est dans la plage de 0,8 à 1 ou -0,8 à -1.

# F I G. 1

# FIG. 2